# EUROPÄISCHE PATENTSCHRIFT

(11) **EP 2 640 940 B1**
(45) Veröffentlichungstag und Bekanntmachung des Hinweises auf die Patenterteilung: **30.12.2015**
(21) Anmeldenummer: 11779160.8
(22) Anmeldetag: 31.10.2011
(51) Int. Cl.: F01N 3/022, F02M 25/07

(54) **REINIGBARER PARTIKELABSCHEIDER**
CLEANABLE PARTICLE SEPARATOR
SÉPARATEUR DE PARTICULES POUVANT ÊTRE NETTOYÉ

(30) Priorität: 19.11.2010 DE 102010051729
(43) Veröffentlichungstag der Anmeldung: 25.09.2013
(60) Teilanmeldung: 14197518.5
(73) Patentinhaber: Continental Automotive GmbH, 30165 Hannover (DE)
(72) Erfinder: SITTIG, Joachim, 53721 Siegburg (DE); VOIT, Michael, 51375 Leverkusen (DE); KURTH, Ferdi, 53894 Mechernich (DE); WIERES, Ludwig, 51491 Overath (DE)
(86) Internationale Anmeldenummer: PCT/EP2011/069071
(87) Internationale Veröffentlichungsnummer: WO 2012/065835

(56) Entgegenhaltungen:
- DE-A1- 3 903 312
- DE-A1- 19 910 258
- JP-A- 2010 255 582
- US-A- 1 777 957
- US-A1- 2008 127 637

## Beschreibung

Die vorliegende Erfindung betrifft einen Partikelabscheider zur Behandlung von Abgasen einer Verbrennungskraftmaschine. Die Erfindung findet insbesondere Anwendung bei mobilen Verbrennungskraftmaschinen, wie sie bspw. bei Kraftfahrzeugen vorgesehen sind.

Das Abgas einer Verbrennungskraftmaschine enthält regelmäßig Schadstoffe und Feststoffe, die gerade unter Berücksichtigung der entsprechenden Vorschriften zum Schutz der Gesundheit und der Umwelt zu entfernen sind. Im Hinblick auf die Feststoffe wurde bereits vorgeschlagen, Bestandteile des Brennstoffes, wie z. B. Ruß oder unverbrannte Kohlenwasserstoffe, Schwefelverbindungen, etc. aus dem Abgas heraus zu filtern und dann (katalytisch und/oder thermisch und/oder chemisch) zu beseitigen bzw. umzuwandeln. Hierzu ist bekannt, Filter einzusetzen, die beispielsweise eine poröse Wand aufweisen, an bzw. in denen diese Feststoffe zurückgehalten werden.

Neben diesen, aus dem verbrannten Brennstoff entstehenden Feststoffen können zusätzliche Partikel im Abgas mitgeführt werden, die einen anderen Ursprung haben und um Größenordnungen größer sind als diese Feststoffe. Verbrennungskraftmaschinen und die dazu gehörige Abgasanlage unterliegen im Betrieb oft starken Vibrationen. Hierdurch können sich Partikel, insbesondere in Form von Spänen, Stücken von Beschichtungen und Ablagerungen, Teile von Abgasbehandlungseinheiten lösen, und - mitgerissen durch den Abgasstrom - nachfolgende Bauteile durch den Impuls des Einschlages beschädigen. Zudem können diese Partikel bei bewegten Bauteilen im Abgassystem, wie insbesondere einem Turbolader bzw. Turboverdichter, durch die erhöhte Reibwirkung in Dichtspalten zu erhöhter Abrasion führen. Zudem sind Abgassysteme bekannt, die einen Teil des erzeugten Abgases wieder der Verbrennungskraftmaschine zurückführen (AGR/EGR: Abgasrückführung), so dass für diesen Fall ebenfalls die Gefahr besteht, dass die Verbrennungskraftmaschine solchen Partikeln ausgesetzt wird und dabei Schaden nimmt.

Es hat sich nunmehr gezeigt, dass die zurückgehaltenen Partikel mit zunehmender Betriebsdauer Probleme erzeugen können. Hierbei ist zu berücksichtigen, dass diese Partikel zum Beispiel keramisch und/oder metallisch sind und im Abgassystem nicht umgesetzt werden. Folglich sammeln sich diese Partikel im Abgassystem z. B. in der Nähe eines Partikelabscheiders an und/oder treffen immer wieder auf diesen auf. Eine solche Ansammlung von Partikeln kann zu einem lokalen bzw. schwankendem Druckverlust im Abgasstrom führen, der unerwünschte (leistungsmindernde) Effekte bei der Verbrennungskraftmaschine und/oder dem Abgassystem zur Folge haben kann. Außerdem steigt in diesem Fall auch die Belastung für den Partikelabscheider, so dass die Stabilität des Partikelabscheiders eine zunehmende Bedeutung erlangt.

Die DE 199 10 258 A1 beschreibt einen Filter zum Entfernen von Ruß- und Aschepartikeln aus dem Abgasstrom eines Dieselmotors. Hierin wird ein Filter derart angeordnet, dass er senkrecht steht und von außen nach innen durchströmt wird, und somit infolge von unweigerlich auftretenden Vibrationen von den Ruß- und Aschepartikeln befreit wird. Die der Schwerkraft folgenden Partikel werden in einem sich verjüngenden Partikelsammelbehältnis gesammelt und können über einen Auslass, welcher mit einer Verschlussschraube verschlossen ist, entfernt werden.

In der US 1,777,957 wird eine Abgasreinigungsvorrichtung beschrieben, bei der Abgas durch zwei Filterlagen horizontal durchtritt und in einem Sammelbehältnis Staub (z. B. Asche) gesammelt wird, welcher über eine Öffnung entfernt werden kann.

Die DE 39 03 312 A1 beschreibt eine Vorrichtung zum Verbrennen von Festkörperpartikeln. Es wird ein zylindrisches Gehäuse beschrieben, welches von unten nach oben durchströmt wird, wobei ein Filter zwischengeschaltet ist, so dass Partikel infolge der Schwerkraft nach unten fallen und sich in einem Trichter sammeln, wo sie von einem Glühkörper entzündet werden und verbrennen. An dem Boden des Trichters ist eine Klappe vorgesehen, welche in bestimmten Zeitabständen geöffnet werden kann, um so die entstandene Asche zu entfernen. Hierbei ist ein Schwingungserzeuger vorgesehen, der verhindert, dass sich Zwischenräume bilden und kein Nachrutschen der Partikel stattfindet.

Die US 2008/0127637 A1 beschreibt ein flächiges Partikelfilterelement zum Entfernen von Rußpartikeln aus dem Abgasstrom eines Dieselmotors. Dabei wird auch vorgeschlagen, dass aus der Regeneration stammende Asche von der Fläche frei abrutschen und ggf. durch eine seitliche Öffnung im Gehäuse des Partikelfilters abgeführt werden kann.

Darüber hinaus konnte bei flächigen Partikelabscheidern dieser Art auch festgestellt werden, dass der Verbund aus einer Sieblage und dem Gehäuse teilweise technisch sehr aufwändig und damit auch kostenintensiv realisiert wurde. Außerdem konnte auch beobachtet werden, dass sich dieser Verbund im Dauerbetrieb auch teilweise wieder gelöst hat, wodurch zum Teil neue (metallische) Partikel produziert wurden, die dann wieder nachgelagerte Bauteile des Abgassystems gefährdeten.

Problematisch bei diesen Partikelabscheidern ist zudem, dass die angesammelten (keramischen) Partikel nicht wie die Feststoffe umgesetzt werden können. Deshalb wird hier insbesondere nach einer Möglichkeit gesucht, diese Partikelabscheider zu reinigen.

Hiervon ausgehend ist es Aufgabe der hier vorliegenden Erfindung, die mit Bezug auf den Stand der Technik geschilderten technischen Probleme zumindest teilweise zu lösen. Insbesondere soll ein Partikelabscheider zur Behandlung von Abgasen angegeben werden, der trotz einer guten Sammelrate für Partikel dauerhaft für das Abgas durchlässig bleibt und zugleich einen geringen Einfluss auf die Strömungs- und Druckverhältnisse in der Abgasleitung aufweist.

Diese Aufgaben werden gelöst mit einem Partikelabscheider gemäß den Merkmalen des Patentanspruches 1. Weitere vorteilhafte Ausgestaltungen der Anordnung sind in den abhängig formulierten Patentansprüchen angegeben. Es ist darauf hinzuweisen, dass die in den Unteransprüchen einzeln aufgeführten Merkmale in beliebiger, technologisch sinnvoller, Weise miteinander kombiniert werden können und weitere Ausgestaltungen der Erfindung aufzeigen. Die Beschreibung, insbesondere im Zusammenhang mit den Figuren, veranschaulicht die Erfindung und führt weitere Ausführungsbeispiele an.

Der erfindungsgemäße Partikelabscheider zur Behandlung von Abgasen einer Verbrennungskraftmaschine weist mindestens eine von Abgas durchströmbare metallische Lage in einem Gehäuse mit einer Einlassöffnung, einer Auslassöffnung und einer Zentrumsachse auf, wobei mindestens eine das Gehäuse seitlich durchdringende Revisionsöffnung vorgesehen ist, die einen Durchgang hin zur metallischen Lage bereitstellt.

Mit einem Partikelabscheider wird hier insbesondere eine Vorrichtung angesprochen, die z. B. (keramische und/oder metallische) Späne, Splitter, Brocken, etc. zurückhält, die von einem Bauteil des Abgassystems abgelöst wurden, beispielsweise infolge der Vibrationen im Betrieb und/oder der Pulsation des Abgasstroms und/oder der Alterung. Insbesondere können solche Partikel zurückgehalten werden, die sich aus einem keramischen oder keramisch beschichteten Wabenkörper gelöst haben. Auch können weniger stabile Partikel infolge des Impulses im Zusammenspiel mit der Steifigkeit oder Trägheit des Partikelabscheiders in kleinere, für weitere stromabwärts angeordnete Bauteile unbedenkliche Partikel zerteilt werden.

Die für das Abgas durchströmbare metallische Lage ist gerade im Hinblick auf die Zurückhaltung der vorstehend genannten Partikel ausgeführt. Bevorzugt ist hierbei, dass nur eine (einzelne) metallische Lage zum Einsatz kommt. Gegebenenfalls kann diese mit mehreren Schichten ausgeführt sein (z. B. einer ersten Schicht zum Heraussieben der Partikel und eine zweite Schicht zur Fixierung der ersten Schicht in dem Gehäuse), wobei diese Schichten dann bevorzugt miteinander verlötet, verschweißt, versintert oder dergleichen sind. Damit stellt die metallische Lage insbesondere ein (einzelnes) Flächengebilde dar, das den Querschnitt des Gehäuses (vollständig) überspannt, so dass keine Strömung vorbei an der metallischen Lage möglich ist. Dabei ist die metallische Lage so robust bzw. formstabil ausgeführt, dass sie dauerhaft den Bedingungen (insbesondere den Kontakt mit den Partikeln) am Einsatzort des Abgassystems standhalten kann.

Der Partikelabscheider hat mindestens eine metallische Lage mit wenigstens einer Vertiefung, zu der sich dieser Durchgang hin erstreckt. Die Vertiefung der metallischen Lage ist aus anströmseitiger Sicht als Vertiefung zu sehen, so dass sich mögliche Partikel in der Vertiefung aufgrund des Strömungsdruckes und/oder der Schwerkraft in der Vertiefung sammeln. Die Vertiefung kann eine gewisse Erstreckung quer zur Strömungsrichtung haben, insbesondere in einer Querschnittsebene senkrecht zur Zentrumsachse. Mit Hilfe des Durchgangs bzw. der Revisionsöffnung kann aus dieser Vertiefung zumindest ein Teil der angesammelten Partikel durch Absaugung und/oder Ausblasen im Zusammenhang mit einer weiteren Revisionsöffnung gereinigt werden. Da sich die Partikel bereits in der Vertiefung gesammelt haben, kann der Reinigungsvorgang schnell und effektiv durchgeführt werden. Mitunter können die Partikel durch die Anordnung des Durchganges nach unten - in Bezug auf das Schwerefeld der Erde - sich selbsttätig aus dem Partikelabscheider entfernen.

Weiterhin erstreckt sich die mindestens eine Vertiefung der metallischen Lage bis zum Gehäuse und der Durchgang ist mit der mindestens einen Vertiefung auf einer Höhe angeordnet. Hierbei ist insbesondere gemeint, dass die Vertiefung nicht in Form eines vollständig geschlossenen Beutels ausgeführt ist. Die Vertiefung erstreckt sich wie eine räumlich geformte Wellung durch das Gehäuse und diese Erstreckung wird erst durch gegenüberhegende Gehäusewandabschnitte begrenzt. Hierdurch ist es möglich, die metallische Lage sehr stabil zu halten, wobei sich der Durchgang mit z. B. einem Mantel nicht in das Gehäuse hinein zu erstrecken muss, sondern von der Innenseite des Gehäuses aus gesehen lediglich als Bohrung im Gehäuse ausgeführt sein kann. Wird der Durchgang in der Höhe (d. h., auf einer gemeinsamen Querschnittsebene) der Vertiefung angeordnet, so können die angesammelten Partikel einfach durch Durchblasen und/oder

Absaugen aus dem Partikelabscheider entfernt werden. Auch ist eine Anordnung möglich, die eine Selbstleerung des Partikelabscheiders infolge von Schwerkraft ermöglicht.

Die metallische Lage kann beispielsweise als gelochtes Blech, als Gitterblech oder dergleichen ausgeführt sein. Zudem kann die metallische Lage (bevorzugt) als Gewebe ausgeführt sein, das regelmäßig und/oder unregelmäßig zueinander angeordnete Drähte, Filamente und/oder Späne umfasst. Auch können Gelege und Gewirre verwendet werden, die mit Drähten, Filamenten und/oder Spänen gebildet sind. Diese Drähte, Filamente und/oder Späne können z. B. mittels Widerstandschweißen, Sintern und/oder Löten miteinander verbunden sein. Insbesondere zeichnet sich die metallische Lage durch ihre Durchlässigkeit für Abgase aus, wobei ein sehr geringer Druckverlust eintritt. Mit "metallisch" ist hier insbesondere eine eisenhaltige und/oder aluminiumhaltige metallische Legierung gemeint.

Das Gehäuse ist in der Regel ein Blechmantel, der an die Form der Abgasleitung angepasst ist. Das Gehäuse kann aus Rohrmaterial mit verschiedenen Querschnittsformen rund, oval, eckig oder sonstigen erforderlichen Formen gebildet sein. Insbesondere kommt hier ein im Wesentlichen zylindrisches Gehäuse zum Einsatz, dass beispielsweise zwischen die angrenzenden Teile der Abgasleitung eingesetzt und mit diesen verschweißt werden kann.

Durch die Einlassöffnung strömt regelmäßig das Abgas in das Gehäuse ein und über die Auslassöffnung tritt das Abgas wieder aus. Die Zentrumsachse des Gehäuses verläuft regelmäßig durch den geometrischen Flächenschwerpunkt der Einlassöffnung und der Auslassöffnung, dabei kann die Zentrumsachse ggf. auch gekrümmt sein, wenn das Gehäuse eine Biegung aufweist. So bildet sie z. B. bei einer zylindrischen Ausführungsform die Zentrumsachse durch den Mittelpunkt des Kreisquerschnittes. Der Querschnitt des Gehäuses zwischen der Einlassöffnung und Auslassöffnung wird senkrecht zur Zentrumsachse betrachtet und kann variierende Flächengrößen und/oder Flächenformen aufweisen. Bevorzugt ist aber, dass die Größe und Form des Querschnitts entlang der Zentrumsachse gleich ausgebildet ist, also Einlassöffnung, Querschnitt und Auslassöffnung diesbezüglich gleich sind. Im Hinblick auf die Lage der mindestens einen metallischen Lage im Gehäuse ist bevorzugt, dass diese sich weder über die Einlassöffnung noch die Auslassöffnung hinaus erstreckt.

Bei diesem Gehäuse ist nun wenigstens eine, bevorzugt eine einzelne oder maximal zwei, Revisionsöffnung (Wartungsöffnung, etc). vorgesehen. Die seitlich das Gehäuse durchdringende Revisionsöffnung ermöglicht den Zugang von außen hin zum Innenbereich des Gehäuses durch dieses hindurch, ohne dass der Partikelabscheider demontiert werden muss. Die Revisionsöffnung ist so angeordnet, dass der Partikelabscheider für Wartung und Reparaturen zugänglich ist. Vorteilhaft ist hierbei, wenn die Revisionsöffnung nach unten geneigt (in Richtung zur Schwerkraft) ausgerichtet ist. So lagern sich im Stand die Partikel bei der Revisionsöffnung. Der Durchgang zur metallischen Lage ist insbesondere so gestaltet, dass der innen liegende Querschnitt für eine Strömungsrichtung des Abgases hiervon nur geringfügig reduziert wird. Gleichfalls sollte ermöglicht sein, dass (Werkzeuge, Schläuche und insbesondere) die Partikel hindurchgeführt werden können. Der Durchgang kann in beliebiger Form gestaltet sein, jedoch bietet sich an, den Durchgang rund bzw. kreisförmig nach Art eines rohrförmigen Kanals zu gestalten, wodurch bei minimalem Raumbedarf insbesondere eine hohe Bewegungsfreiheit erreicht wird. Bevorzugt weist diese Revisionsöffnung einen Durchmesser im Bereich von 5 bis 15 mm [Millimeter] auf.

In einer weiteren vorteilhaften Ausführungsform des Partikelabscheiders hat die mindestens eine Revisionsöffnung einen separaten Mantel, der sich in einen Innenbereich des Gehäuses hinein erstreckt.

Der Innenbereich des Gehäuses ist derjenige Bereich, der von Abgas durchströmt wird. Der Mantel kann nach jeglicher Form gebildet sein, so kann er z. B. aus metallischem Rohrmaterial mit beliebigem Querschnitt oder aus ungeformten an den Endflächen stoßseitig gefügten, z. B. geschweißt oder gelötet, zu einem beliebigen Querschnitt geformt werden. Vorteilhafterweise kann der separate Mantel der Revisionsöffnung durch eine runde Bohrung im Gehäuse hindurch gesteckt werden. Insbesondere wird der Mantel mit dem Gehäuse stoffschlüssig verbunden, so dass er dauerhaft gegen Vibrationen gesichert mit dem Gehäuse verbunden bleibt. "Stoffschlüssige" Verbindungen werden die Verbindungen genannt, bei denen die Verbindungspartner durch atomare oder molekulare Kräfte zusammengehalten werden. Folglich ist der separate Mantel kein Teilbereich des Gehäuses sondern ein eigenständiges Bauteil, das mit dem Gehäuse verbunden ist. Zudem können an dem Mantel Strömungsleitflächen und/oder geeignete Oberflächen, Beschichtungen, etc. vorgesehen sein, die eine druckverlustarme Umströmung für das Abgas im Inneren ermöglichen.

In einer weiteren vorteilhaften Ausführungsform des Partikelabscheiders weist die mindestens eine metallische Lage wenigstens einen Durchlass auf, an dem der Durchgang endet. Durch einen Durchlass in der metallischen Lage können die angesammelten Partikel in dem Partikelabscheider einfach herausgesaugt werden bzw. bei geeigneter Anordnung im Schwerefeld selbsttätig herausfallen. Der Durchlass weist insbesondere im Vergleich zu den sonstigen Öffnungen der metallischen Lage große Aussparung auf, durch die die Partikel sicher abgeführt werden können.

Weiterhin wird auch vorgeschlagen, dass der Durchgang verschließbar ist. Dadurch kann der Partikelabscheider im Betriebszustand insbesondere so weit verschlossen werden, dass keine Abgase nach außen abgeführt werden. Bei der Wartung hingegen kann der Durchgang geöffnet und das angesammelte Partikelmaterial einfach entfernt werden, ohne dass der Partikelabscheider demontiert werden muss. Zum Verschluss können Kappen oder dergleichen eingesetzt werden. Ebenso kann ein (betätigbares) Ventil an der Revisionsöffnung oder einer sich daran außen anschließenden Leitung angeordnet sein, mit der der Zugang zum Innenbereich des Gehäuses geöffnet und geschlossen werden kann.

In einer weiteren vorteilhaften Ausführungsform des Partikelabscheiders ist die Revisionsöffnung außerhalb des Gehäuses mit einem Partikelreservoir verbindbar. In einem solchen Partikelreservoir können die angesammelten Partikel gesammelt werden, ohne dass das Abgas während des Betriebes aus einer Abgasleitung austritt. Trotzdem ist stets dafür gesorgt, dass der Partikelabscheider von Partikeln frei bleibt und stets den geringst möglichen Strömungswiderstand bietet. Weiterhin kann ein solches Partikelreservoir auch ohne fachliche Anleitung geleert werden, so dass eine Beschädigung der metallischen Lage durch unsachgemäße Wartung unterbunden wird. Als Partikelreservoir kommt insbesondere ein externer Auffangbehälter in Betracht.

In einer weiteren vorteilhaften Ausführungsform des Partikelabscheiders ist an der mindestens einen Revisionsöffnung ein Druckeinstellmittel anordenbar. Das Druckeinstellmittel ist dazu geeignet, einen Überdruck und/oder einen Unterdruck in dem Durchgang einzustellen. So können die in dem Partikelabscheider angesammelten Partikel abgesaugt und/oder ausgeblasen werden. Hierfür kann eine geeignete Druckluftquelle und/oder eine Saugvorrichtung mit der Revisionsöffnung verbunden werden, die gegebenenfalls bedarfsgerecht zugeschaltet und/oder aktiviert werden kann. Dazu kann die Revisionsöffnung mit einem entsprechenden Anschluss außen ausgeführt sein, über den schnell und einfach das Druckeinstellmittel kontaktiert werden kann.

In einer vorteilhaften Ausführungsform des Partikelabscheiders ist die metallische Lage nur mit Öffnungen mit einer Weite von mindestens 0,05 mm [Millimeter] ausgeführt. In diesem Fall hat die metallische Lage bevorzugt eine Abscheidewirkung (nur) für Partikel, die größer als die Öffnungen sind. Ganz besonderes bevorzugt ist, dass die Öffnungen maximal eine Weite bis 0,25 mm aufweisen, insbesondere im Bereich von 0,1 bis 0,2 mm. Durch den Partikelabscheider sollen insbesondere solche Partikel zurückgehalten werden, die nachfolgende (stromabwärts liegende) Komponenten des Abgassystems beschädigen oder verstopfen können. Gleichzeitig sollen aber auch möglichst große Öffnungen vorgesehen sein, die somit einen möglichst geringen Strömungswiderstand bieten. Eine (vorrangige) Umsetzung von Feststoffen aus der Verbrennung des Brennstoffs (Benzin, Diesel, etc.) steht hierbei nicht im Vordergrund.

Als metallische Lage kommt beispielsweise ein Vlies in Betracht, das miteinander versinterte Drahtfilamente aufweist. Dieses lässt sich bevorzugt mit mindestens einem der nachfolgenden Merkmale beschreiben:
- Durchmesser der Drahtfilamente: zwischen 20 und 50 µm [Mikrometer]; insbesondere aufgebaut mit zwei verschiedenartigen (miteinander gemischten und/oder verbundenen) Drahtfilamenten (z. B. einerseits 20 bis 25 µm; andererseits 38 µm bis 42 µm);
- Flächengewicht des Vlies: zwischen 350 g/mm² und 550 g/mm² [Gramm pro Quadratmillimeter];
- Luftdurchlässigkeit des Vlies: zwischen 2300 und 3500 l/m²/s [Liter pro Quadratmeter und Sekunde].

Ein solches Vlies kann zum Zurückhalten von Ruß und/oder anderen Feststoffen des Abgases eingesetzt werden.

In einer weiteren vorteilhaften Ausführungsform des Partikelabscheiders weist die mindestens eine metallische Lage Öffnungen mit einer Weite in einem Bereich von mindestens 0,05 mm [Millimeter] auf. Ganz besonders bevorzugt ist, dass diese nur Öffnungen aufweist, die mindestens eine Ausdehnung von 0,05 mm haben. In diesem Fall hat die metallische Lage bevorzugt eine Abscheidewirkung (nur) für Partikel, die größer als die Öffnungen sind. Ganz besonderes bevorzugt ist, dass die Öffnungen maximal eine Weite bis 0,25 mm aufweisen, insbesondere im Bereich von 0,1 bis 0,2 mm. Durch den Partikelabscheider sollen insbesondere solche Partikel zurückgehalten werden, die nachfolgende (stromabwärts liegende) Komponenten des Abgassystems beschädigen oder verstopfen können. Gleichzeitig sollen aber auch möglichst große Öffnungen vorgesehen sein, die somit einen möglichst geringen Strömungswiderstand bieten. Eine (vorrangige) Umsetzung von Feststoffen aus der Verbrennung des Brennstoffs (Benzin, Diesel, etc.) steht hierbei nicht im Vordergrund.

Im Rahmen der Erfindung ist auch ein Kraftfahrzeug beschrieben, das wenigstens eine Verbrennungskraftmaschine und ein Abgassystem aufweist, wobei das Abgassystem mit einer Abgasrückführleitung ausgeführt ist und wobei ein Partikelabscheider nach einem der vorhergehenden Patentansprüche in der Abgasrückführleitung angeordnet ist.

In einer Verbrennungskraftmaschine und dem Abgassystem sind bewegte Teile vorgesehen. Insbesondere der Zylinder und Kolben der Verbrennungskraftmaschine sowie die Verdichterschaufeln eines Turboverdichters sind darauf angewiesen, dass sie trotz hoher thermischer Belastung eine gute Dichtung bewirken. Gerade scharfkantige keramische Teile können Turboverdichterschaufeln und Kolbendichtringe stark beschädigen. Hierbei wird nun insbesondere vorgeschlagen, den erfindungsgemäßen Partikelabscheider hinter einem keramischen Wabenkörper und/oder einem keramisch beschichteten Wabenkörper anzuordnen, vor allen Dingen in (d. h. einschließlich "unmittelbar an") der Abgasrückführleitung vor einem Turboverdichter. Durch den Partikelabscheider ist der negative Einfluss der Vergrößerung des Strömungswiderstandes praktisch dauerhaft vernachlässigbar. Zudem kann der Partikelabscheider aufgrund seiner anpassbaren baulichen Ausdehnung und Flexibilität sehr flexibel eingesetzt werden, vor allen Dingen in Bereichen der Abgasleitung, die bisher aus baulichen Gründen ungenutzt blieben.

Die Erfindung sowie das technische Umfeld werden nachfolgend anhand der Figuren näher erläutert. Die Figuren zeigen besonders bevorzugte Ausführungsbeispiele, auf die die Erfindung jedoch nicht begrenzt ist. Die Figuren sind schematisch und benennen gleiche Bauteile mit gleichen Bezugszeichen. Es zeigen:
- Fig. 1:: einen Partikelabscheider mit zwei Revisionsöffnungen;
- Fig. 2:: einen Partikelabscheider mit vier Revisionsöffnungen;
- Fig. 3:: einen Partikelabscheider mit zwei Revisionsöffnungen mit Deckel;
- Fig. 4:: einen Partikelabscheider mit Druckeinstellmittel;
- Fig. 5:: einen Partikelabscheider mit Partikelreservoir;
- Fig. 6:: ein Kraftfahrzeug mit einem Abgassystem und einem Partikelabscheider;
- Fig. 7:: eine metallische Lage mit zwei Schichten; und
- Fig. 8:: einen Partikelabscheider in Draufsicht mit Revisionsöffnung und Deckel.

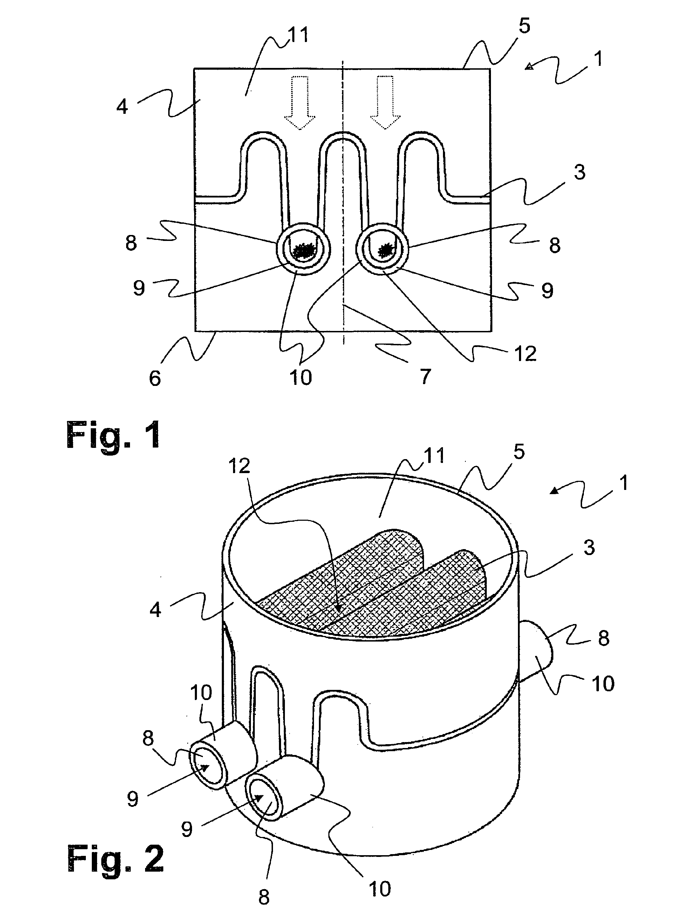

In Fig. 1 ist ein Partikelabscheider 1 gezeigt mit einer metallischen Lage 3 und zwei Vertiefungen 12 (den Querschnitt überspannende Wellung), an denen jeweils eine Revisionsöffnung 8 mit je einem Durchgang 9 zum Innenbereich 11 des Gehäuses 4 des Partikelabscheiders 1 angeordnet ist. Die Revisionsöffnung 8 ist mit einem Mantel 10 versehen. Die Einlassöffnung 5 und die Auslassöffnung 6 des Gehäuses 4 bilden die Zentrumsachse 7, zu der die metallische Lage 3 im Wesentlichen senkrecht ausgerichtet ist.

In Fig. 2 ist ein ähnlicher Partikelabscheider 1 mit einer wellenförmig ausgebildeten metallischen Lage 3 im Gehäuse 4 von der Einlassöffnung 5 her zu sehen. In dieser Ansicht ist zu erkennen, dass die Revisionsöffnungen 8 in den Vertiefungen 12 angeordnet sind, wobei sich die metallische Lage 3 bzw. die Vertiefung 12 bis zum Gehäuse 4 erstreckt und der Durchgang 9 der Revisionsöffnung 8 auf einer Höhe (gleiche Querschnittsebene senkrecht zur Zentrumsachse 7) mit der Vertiefung 12 angeordnet ist. Auch hier sind die Revisionsöffnungen 8 jeweils mit einem Mantel 10 gestaltet, der den Durchgang bildet und in den Innenbereich 11 des Gehäuses 4 hineinragt. Ebenso ist in dieser Darstellung zu erkennen, dass die metallische Lage 3 zwischen zwei Gehäuseteilen des Gehäuses positioniert und mit diesen mit einer Schweißverbindung verbunden ist, wobei sich aufgrund der komplexen Form der metallischen Lage 3 auch ein komplexer Verlauf der Schweißverbindung in Umfangsrichtung zu dem Gehäuse 4 ergibt. Jedenfalls wird so eine im Innenbereich 11 des Gehäuses 4 vollständige und dichte Anbindung der metallischen Lage 3 realisiert.

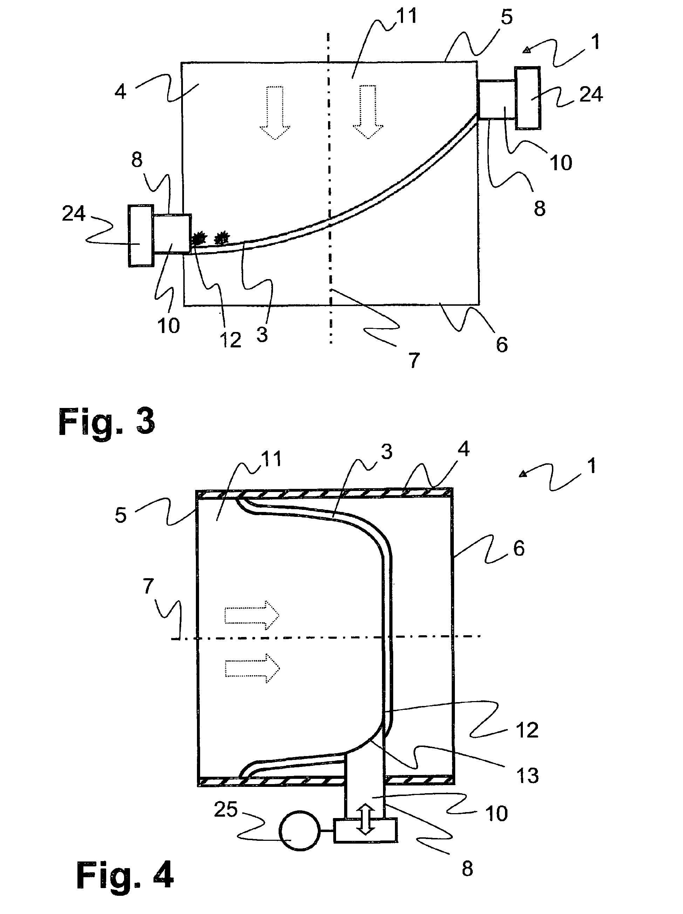

In Fig. 3 ist schematisch ein Partikelabscheider 1 in der Seitenansicht gezeigt, wobei wiederum die Einlassöffnung 5 und die Auslassöffnung 6 die Zentrumsachse 7 des Gehäuses 4 bilden. In dieser Ausführungsform bildet die metallische Lage 3 eine Vertiefung 12, an der auf der Seite links eine Revisionsöffnung 8 vorgesehen ist. Weiterhin ist eine weitere Revisionsöffnung 8 auf der rechten Seite vorgesehen. In einem solchen Fall kann die linke Revisionsöffnung 8 z. B. zum Absaugen oder Ausblasen von gesammelten Partikeln in der Vertiefung 12 verwendet werden. Die rechte Revisionsöffnung 8 kann ebenfalls zum Aussagen oder Ausblasen verwendet werden. Auch kann bei einer Revision des Partikelabscheiders 1 ein (Luft-) Strom durch die linke Revisionsöffnung 8 zur rechten Revisionsöffnung 8 oder umgekehrt zum Mitnehmen der gesammelten Partikel eingesetzt werden. Auch hier sind die Revisionsöffnungen 8 mit einem separaten Mantel 10 ausgeführt. Im Betrieb sind die Revisionsöffnungen 8 jeweils mit einem Deckel 24 versehen, so dass die Revisionsöffnungen 8 verschlossen sind und kein Abgas aus dem Partikelabscheider 1 austreten kann.

In Fig. 4 ist ein Partikelabscheider 1 in seitlicher Anordnung gezeigt, so dass die Revisionsöffnung 8, die sich in das Gehäuse 4 zu einer Vertiefung 12 der metallischen Lage 3 von außen her erstreckt und angesammelte Partikel durch einen Durchlass 13 in der metallischen Lage 3 selbsttätig austreten können. (Die metallische Lage 3 ist in Fig. 4 nicht erfindungsgemäß geformt, nämlich ohne die räumliche Wellung.) Zusätzlich ist an dem Mantel 10 der Revisionsöffnung 8 ein Druckeinstellmittel 25 vorgesehen, durch das verschiedene Aufgaben erfüllt werden kann. Zum Einen kann das durch die Einlassöffnung 5 entlang der Zentrumsachse 7 in Richtung der Auslassöffnung 6 strömende Abgas im Regelfall nicht austreten, aber beim beladenen Partikelabscheider 1 einen unerwünschten Überdruck in der Abgasleitung durch Überdrucköffnen des Druckeinstellmittels 25 unterbinden. Weiterhin kann durch das Druckeinstellmittel 2 5 z. B. eine Druckluftleitung zur Reinigung des Partikelabscheiders 1 bei der Wartung ohne zusätzliche Druckeinstellmittel angeschlossen werden, ohne dass die metallische Lage 3 durch zu hohen Druck beschädigt werden kann.

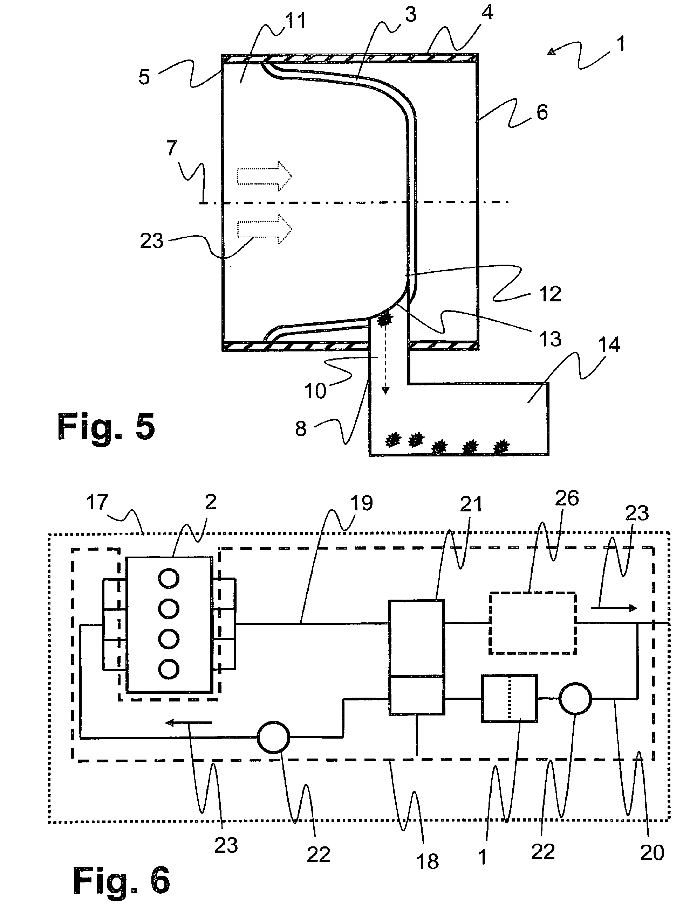

Auch in Fig. 5 ist ein Partikelabscheider 1 quer zum Schwerefeld angeordnet, so dass das Abgas durch die Einlassöffnung 5 entlang der Zentrumsachse 7 durch die metallische Lage 3 in Richtung Auslassöffnung 6 hindurch tritt. (Die metallische Lage 3 ist in Fig. 5 nicht erfindungsgemäß geformt, nämlich ohne die räumliche Wellung.) Die Revisionsöffnung 8, die bei der Vertiefung 12 in den Innenbereich 11 des Gehäuses 4 hineinragt, entlässt Partikel, die durch die metallische Lage 3 in der Vertiefung 12 zurückgehalten werden, über den Durchlass 13 und durch den Mantel 10 in das Partikelreservoir 14. Hierdurch ist gewährleistet, dass der Partikelabscheider 1 bzw. die metallische Lage 3 stets voll durchlässig für das anströmende Abgas über die Einlassöffnung 5 bleibt. Gleichzeitig kann aber auch das Abgas nicht in die Umgebung aus dem Partikelabscheider 1 austreten.

In Fig. 6 ist ein Kraftfahrzeug 17 gezeigt, das eine Verbrennungskraftmaschine 2, einen Partikelabscheider 1, einen Turbolader 21 und optional eine Abgasreinigungseinheit 26 aufweist. Das Abgassystem 18 besteht aus einer Abgasleitung 19 und einer Abgasrückführleitung 20. Der Hubraum der Verbrennungskraftmaschine 2 wird von der links dargestellten Seite mit aufgeladenem Abgas versorgt und auf der anderen Seite strömt Abgas in Strömungsrichtung 23 wieder aus. Durch den Partikelabscheider 1 in der Abgasrückführleitung 20 ist der Turboverdichter des Turboladers 21 vor jeglichen größeren Partikeln im Abgassystem 18 geschützt. Diese Partikel können beispielsweise von einer (teilweise) keramischen Abgasreinigungseinheit 26 stammen, die das Abgas zuvor durchströmt hat. Somit schützt der Partikelabscheider 1, so dass alle nachfolgenden (stromabwärts angeordneten) Bauteile vor größeren Partikeln aus der Verbrennungskraftmaschine 2, vor dem Partikelabscheider 1 liegenden Abschnitten der Abgasleitung 19. Solche Bauteile sind insbesondere der Turbolader 21 und/oder andere Abgasreinigungseinheiten und/oder die Kühler 22 (bzw. Wärmetauscher), insbesondere in der Abgasrückführleitung 20. Somit sind auch die Verbrennungskraftmaschine 2 und ihre Hubräume vor der Beschädigung durch größere Partikel geschützt. Die Fig. 6 zeigt eine beliebige technisch sinnvolle Anordnung der Partikelabscheider 1 und stellt keine Begrenzung der exakten Anordnung des Partikelabscheiders 1 dar.

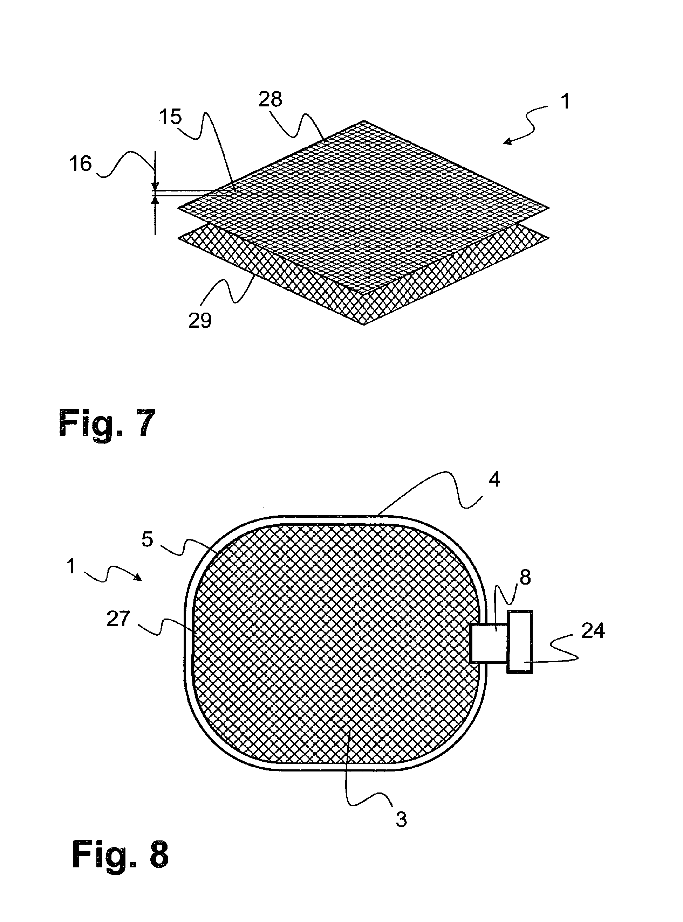

Fig. 7 zeigt eine mehrschichtige Version einer metallischen Lage 3, wobei eine erste Schicht 28 und eine zweite Schicht 29 in direktem, flächigem Kontakt zueinander angeordnet sind (hier teilweise als Explosionsdarstellung). Die zuerst angeströmte erste Schicht 28 hat eine Weite 16 der Öffnungen 15, die um ein Vielfaches kleiner ist, als die Weite 16 der Öffnungen 15 in der nachfolgenden zweiten Schicht 29. Damit übernimmt (nur) die erste Schicht die Funktion der Partikelabscheidung, während die zweite Schicht 29 (allein) zur (rückwärtigen) Stütze bzw. teilweisen Auflage der ersten Schicht 28 dient. Jedenfalls hat die metallischen Lage 3 (bzw. hier die erste Schicht 28) Öffnung 15 mit einer Weite 16, die in einem Bereich von 0,05 bis 0,25 mm liegen.

In Fig. 8 ist ein Partikelabscheider 1 in Draufsicht gezeigt, wobei die metallische Lage 3 der Einfachheit halber mit einer Struktur gezeigt ist, die einer Wellung optisch nicht entspricht. Fig. 8 zeigt bloß eine von vielfältigen Möglichkeiten der Ausgestaltung des Querschnittes 27 des Gehäuses 4 bzw. der Einlassöffnung 5. Ebenfalls möglich ist, dass die Einlassöffnung 5 und die Auslassöffnung 6 zueinander verschiedene und/oder zum sonstigen Querschnitt 27 des Gehäuses 4 verschiedene Formen aufweist. Auch hier ist rechts eine Revisionsöffnung 8 mit einem Deckel 24 veranschaulicht.

Damit löst die Erfindung zumindest teilweise die im Zusammenhang mit dem Stand der Technik geschilderten technischen Probleme. Insbesondere wurde ein Partikelabscheider vorgeschlagen, der ohne Demontage funktionstüchtig gehalten werden kann bzw. selbsttätig stets voll durchlässig bleibt.

### Bezugszeichenliste

- 1: Partikelabscheider
- 2: Verbrennungskraftmaschine
- 3: metallische Lage
- 4: Gehäuse
- 5: Einlassöffnung
- 6: Auslassöffnung
- 7: Zentrumsachse
- 8: Revisionsöffnung
- 9: Durchgang
- 10: Mantel
- 11: Innenbereich
- 12: Vertiefung
- 13: Durchlass
- 14: Partikelreservoir
- 15: Öffnungen
- 16: Weite
- 17: Kraftfahrzeug
- 18: Abgassystem
- 19: Abgasleitung
- 20: Abgasrückführleitung
- 21: Turbolader
- 22: Kühler
- 23: Strömungsrichtung
- 24: Deckel
- 25: Druckeinstellmittel
- 26: Abgasreinigungseinheit
- 27: Querschnitt
- 28: erste Schicht
- 29: zweite Schicht

## Patentansprüche

1. Partikelabscheider (1) zur Behandlung von Abgasen einer Verbrennungskraftmaschine (2), wobei mindestens eine von Abgas durchströmbare metallische Lage (3) in einem Gehäuse (4) mit einer Einlassöffnung (5), einer Auslassöffnung (6) und einer Zentrumsachse (7) angeordnet ist, wobei mindestens eine das Gehäuse (4) seitlich durchdringende Revisionsöffnung (8) vorgesehen ist, die einen Durchgang (9) hin zur metallischen Lage (3) bereitstellt, **dadurch gekennzeichnet, dass** die mindestens eine metallische Lage (3) wenigstens eine Vertiefung (12) hat, zu der sich der Durchgang (9) hin erstreckt und wobei sich die mindestens eine Vertiefung (12) der metallischen Lage (3) bis zum Gehäuse (4) erstreckt und der Durchgang (9) mit der mindestens einen Vertiefung (12) auf einer Höhe angeordnet ist und wobei die Vertiefung (12) sich we eine räumlich geformte Wellung durch das Gehäuse (4) erstreckt und diese Erstreckung erst durch gegenüberliegende Gehäusewandabschnitte begrenzt wird.

2. Partikelabscheider (1) nach Patentanspruch 1, wobei der Partikelabscheider (1) derart ausgeführt ist, dass Späne, Splitter und/oder Brocken zurückgehalten werden, die von einem Bauteil eines Abgassystems (18) abgelöst wurden.

3. Partikelabscheider (1) nach Patentanspruch 1 oder 2, wobei nur eine einzelne metallische Lage (3) zum Einsatz kommt, wobei die metallische Lage (3) insbesondere mit mehreren Schichten (28,29) ausgeführt ist, wobei diese Schichten (28,29) bevorzugt miteinander verlötet, verschweißt oder versintert sind.

4. Partikelabscheider (1) nach einem der vorhergehenden Patentansprüche, wobei die Revisionsöffnung (8) nach unten in Richtung zur Schwerkraft geneigt ausgerichtet ist.

5. Partikelabscheider (1) nach einem der vorhergehenden Patentansprüche, wobei die Vertiefung (12) eine Erstreckung quer zur Strömungsrichtung (23) in einer Querschnittsebene senkrecht zur Zentrumsachse (7) hat.

6. Partikelabscheider (1) nach einem der vorhergehenden Patentansprüche, wobei die mindestens eine Revisionsöffnung (8) einen separaten Mantel (10) hat, der sich in einen Innenbereich (11) des Gehäuses hinein erstreckt.

7. Partikelabscheider (1) nach einem der vorhergehenden Patentansprüche, wobei die mindestens eine metallische Lage (3) wenigstens einen Durchlass (13) aufweist, an dem der Durchgang (9) endet.

8. Partikelabscheider (1) nach einem der vorhergehenden Patentansprüche, wobei der Durchgang (9) verschließbar ist.

9. Partikelabscheider (1) nach einem der vorhergehenden Patentansprüche, wobei die Revisionsöffnung (10) außerhalb des Gehäuses mit einem Partikelreservoir (14) verbindbar ist.

10. Partikelabscheider (1) nach einem der vorhergehenden Patentansprüche, wobei an der mindestens einen Revisionsöffnung (8) ein Druckeinstellmittel (25) anordenbar ist.

11. Partikelabscheider (1) nach einem der vorhergehenden Patentansprüche, wobei die metallische Lage (3) nur mit Öffnungen (15) mit einer Weite (16) von mindestens 0,05 mm ausgeführt ist, insbesondere maximal eine Weite (16) bis 0,25 mm aufweisen, insbesondere im Bereich von 0,1 bis 0,2 mm.

12. Partikelabscheider (1) nach einem der vorhergehenden Patentansprüche, wobei der Durchgang (9) in der Höhe der Vertiefung (12) angeordnet ist.

13. Partikelabscheider (1) nach einem der vorhergehenden Patentansprüche, wobei die metallische Lage (8) ein Vlies ist, das miteinander versinterte Drahtfilamente aufweist, wobei das Vlies bevorzugt mindestens eines der folgenden Merkmale aufweist:
- Durchmesser der Drahtfilamente: zwischen 20 und 50 µm, wobei das Vlies insbesondere mit zwei verschiedenartigen Drahtfilamenten aufgebaut ist, die bevorzugt miteinander gemischt und/oder verbunden sind und/oder einerseits 20 bis 25 um und andererseits 38 µm bis 42 µm dick sind;
- Flächengewicht des Vlies: zwischen 350 g/mm² und 550 g/mm²;
- Luftdurchlässigkeit des Vlies: zwischen 2300 und 3500 l/m²/s, wobei ein solches Vlies zum Zurückhalten von Ruß und/oder anderen Feststoffen des Abgases einsetzbar ist.

14. Kraftfahrzeug (17), aufweisend wenigstens eine Verbrennungskraftmaschine (2) und ein Abgassystem (18), wobei das Abgassystem (18) mit einer Abgasrückführleitung (20) ausgeführt ist, und wobei mindestens ein Partikelabscheider (1) nach einem der vorhergehenden Patentansprüche in der Abgasrückführleitung (20) angeordnet ist.

## Claims

1. Particle separator (1) for the treatment of exhaust gases of an internal combustion engine (2), wherein at least one metallic layer (3) through which exhaust gas can flow is arranged in a housing (4) with an inlet opening (5), with an outlet opening (6) and with a central axis (7), wherein at least one reconditioning opening (8) is provided which extends through the side of the housing (4) and which provides a passage (9) to the metallic layer (3), **characterized in that** the at least one metallic layer (3) has at least one depression (12) to which the passage (9) extends, and wherein the at least one depression (12) of the metallic layer (3) extends to the housing (4) and the passage (9) is arranged on a level with the at least one depression (12), and wherein the depression (12) extends in the manner of a three-dimensionally shaped undulation through the housing (4) and said extent is first delimited by opposite housing wall portions.

2. Particle separator (1) according to patent Claim 1, wherein the particle separator (1) is designed in such a manner that chips, splinters and/or lumps which have become detached from a component of an exhaust system (18) are retained.

3. Particle separator (1) according to patent Claim 1 or 2, wherein only a single metallic layer (3) is used, wherein the metallic layer (3) is formed in particular with a plurality of plies (28, 29), wherein said plies (28, 29) are preferably brazed, welded or sintered to one another.

4. Particle separator (1) according to one of the preceding patent claims, wherein the reconditioning opening (8) is oriented tilted downwards in the direction of the force of gravity.

5. Particle separator (1) according to one of the preceding claims, wherein the depression (12) has an extent transversely with respect to the flow direction (23) in a cross-sectional plane perpendicular to the central axis (7).

6. Particle separator (1) according to one of the preceding patent claims, wherein the at least one reconditioning opening (8) has a separate casing (10) which extends into an interior (11) of the housing.

7. Particle separator (1) according to one of the preceding patent claims, wherein the at least one metallic layer (3) has at least one through hole (13) at which the passage (9) ends.

8. Particle separator (1) according to one of the preceding patent claims, wherein the passage (9) can be closed off.

9. Particle separator (1) according to one of the preceding patent claims, wherein the reconditioning opening (10) can be connected, outside the housing, to a particle reservoir (14).

10. Particle separator (1) according to one of the preceding patent claims, wherein a pressure setting means (25) can be arranged on the at least one reconditioning opening (8).

11. Particle separator (1) according to one of the preceding patent claims, wherein the metallic layer (3) is formed only with openings (15) with a width (16) of at least 0.05 mm, in particular having a maximum width (16) of up to 0.25 mm, in particular within the range of 0.1 to 0.2 mm.

12. Particle separator (1) according to one of the preceding patent claims, wherein the passage (9) is arranged at the level of the depression (12).

13. Particle separator (1) according to one of the preceding patent claims, wherein the metallic layer (8) is a nonwoven which has wire filaments sintered with one another, wherein the nonwoven preferably has at least one of the following features:
- diameter of the wire filaments: between 20 and 50 µm, wherein the nonwoven is in particular constructed with two different wire filaments which are preferably intermixed and/or interconnected and/or one of which has a thickness of 20 to 25 µm and the other of which has a thickness of 38 µm to 42 µm;
- mass per unit area of the nonwoven: between 350 g/mm² and 550 g/mm²;
- air permeability of the nonwoven: between 2300 and 3500 l/m²/s, wherein such a nonwoven is usable for retaining soot and/or other solids in the exhaust gas.

14. Motor vehicle (17) having at least one internal combustion engine (2) and an exhaust system (18), wherein the exhaust system (18) is formed with an exhaust-gas recirculation line (20), and wherein at least one particle separator (1) according to one of the preceding patent claims is arranged in the exhaust-gas recirculation line (20).

## Revendications

1. Séparateur (1) de particules pour le traitement de gaz d'échappement d'un moteur (2) à combustion interne, dans lequel au moins une toile (3) métallique pouvant être traversée par du gaz d'échappement est mise dans une boîte (4) ayant une ouverture (5) d'entrée et une ouverture (6) de sortie et un axe (7) central, dans lequel il est prévu au moins une ouverture (8) de révision, qui traverse latéralement la boîte (4) et qui ménage un passage (9) allant vers la toile (3) métallique, **caractérisé en ce que** la au moins une toile (3) métallique a au moins un renfoncement (12), vers lequel s'étend le passage (9) et dans lequel le au moins un renfoncement (12) de la toile (3) métallique s'étend jusqu'à la boîte (4) et le passage (9) est disposé avec le au moins un renfoncement (12) à un niveau et dans lequel le renfoncement (12) s'étend dans la boîte (4) comme une ondulation formée dans l'espace et cette étendue n'est délimitée que par des segments opposés de la paroi de la boîte.

2. Séparateur (1) de particules suivant la revendication 1, dans lequel le séparateur (1) de particules est réalisé de manière à retenir des copeaux, des éclats et/ou des fragments, qui se sont détachés d'une pièce d'un système (18) de gaz d'échappement.

3. Séparateur (1) de particules suivant la revendication 1 ou 2, dans lequel il n'est utilisé qu'une toile (3) métallique unique, la toile (3) métallique étant réalisée notamment en ayant plusieurs couches (28, 29), ces couches étant, de préférence, brasées, soudées ou frittées entre elles.

4. Séparateur (1) de particules suivant l'une des revendications précédentes, dans lequel l'ouverture (8) de révision est inclinée vers le bas par rapport à la force de gravité.

5. Séparateur (1) de particules suivant l'une des revendications précédentes, dans lequel le renfoncement (12) a une étendue transversalement à la direction (23) du courant dans un plan de section transversale perpendiculaire à l'axe (7) central.

6. Séparateur (1) de particules suivant l'une des revendications précédentes, dans lequel la au moins une ouverture (8) de révision a une enveloppe (10) distincte, qui s'étend dans une région (11) intérieure de la boîte.

7. Séparateur (1) de particules suivant l'une des revendications précédentes, dans lequel la au moins une toile (3) métallique a au moins une traversée (13) où finit le passage (9).

8. Séparateur (1) de particules suivant l'une des revendications précédentes, dans lequel le passage (9) peut être fermé.

9. Séparateur (1) de particules suivant l'une des revendications précédentes, dans lequel l'ouverture (10) de révision peut communiquer avec un réservoir (14) à particules à l'extérieur de la boîte.

10. Séparateur (1) de particules suivant l'une des revendications précédentes, dans lequel un moyen (25) de réglage de la pression peut être mis sur la au moins une ouverture (8) de révision.

11. Séparateur (1) de particules suivant l'une des revendications précédentes, dans lequel la toile (3) métallique n'est réalisée qu'en ayant des ouvertures (15) ayant une dimension (16) d'au moins 0,05 mm, en ayant notamment une dimension (16) allant jusqu'à 0,25 mm, notamment dans la plage de 0,1 à 0,2 mm.

12. Séparateur (1) de particules suivant l'une des revendications précédentes, dans lequel le passage (9) est mis au niveau du renfoncement (12).

13. Séparateur (1) de particules suivant l'une des revendications précédentes, dans lequel la toile (8) métallique est une nappe, qui a des filaments métalliques frittés entre eux, la nappe ayant, de préférence, au moins l'une des caractéristiques suivantes :
- diamètre des filaments métalliques : entre 20 et 50 µm, la nappe étant constituée, notamment, de deux filaments métalliques de types différents, qui sont, de préférence, mélangés et/ou reliés entre eux et/ou qui ont, d'une part, une épaisseur de 20 à 25 µm et, d'autre part, de 38 à 42 µm ;
- poids par unité de surface de la nappe : entre 350 g/mm² et 550 g/mm² ;
- perméabilité à l'air de la nappe : entre 2 300 et 3 500 l/m²/s, une nappe de ce genre pouvant être utilisée pour retenir de la suie et/ou d'autres substances solides du gaz d'échappement.

14. Véhicule (17) automobile ayant au moins un moteur (2) à combustion interne et un système (18) de gaz d'échappement, le système (18) de gaz d'échappement étant réalisé en ayant un conduit (20) de recyclage des gaz d'échappement, et dans lequel au moins un séparateur (1) de particules suivant l'une des revendications précédentes est monté dans le conduit (20) de recyclage des gaz d'échappement.
